# FASCICULE DE BREVET EUROPEEN

(11) **EP 4 168 308 B1**
(45) Date de publication et mention de la délivrance du brevet: **16.04.2025**
(21) Numéro de dépôt: 21733041.4
(22) Date de dépôt: 17.06.2021
(51) Int. Cl.: B64C 5/02, B64C 39/12, B64D 43/00, G09B 9/08

(54) **AVION POUR LA FORMATION AU PILOTAGE**
FLUGZEUG FÜR FLUGTRAINING
AIRCRAFT FOR FLIGHT TRAINING

(30) Priorité: 17.06.2020 FR 2006305
(43) Date de publication de la demande: 26.04.2023
(73) Titulaire: Dak-Mekatronik-Aerospace, 32000 Auch (FR)
(72) Inventeur: Kabeya Muadiamvita, David Alain, 82120 Poupas (FR)
(74) Mandataire: Ipside
(86) Numéro de dépôt international: PCT/EP2021/066452
(87) Numéro de publication internationale: WO 2021/255186

(56) Documents cités:
- EP-A1- 1 690 788
- WO-A2-2008/054449
- US-A- 5 503 352
- US-A1- 2010 258 678
- US-A1- 2017 320 584
- US-B2- 8 523 101

## Description

L'invention concerne un avion pour la formation au pilotage, ainsi qu'une cabine spécifique pour un tel avion et un simulateur équipé d'une telle cabine. L'avion conforme à l'invention se situe dans la catégorie des avions légers, c'est-à-dire les avions dont la masse est sensiblement inférieure à 2700 kg ou comprise entre 2700 kg et 5700 kg.

Tout le parcours de formation d'un pilote d'avion, depuis l'étape initiale jusqu'au seuil de la première qualification de type, avant l'entrée dans le transport commercial, est émaillé d'insuffisances de mises en pratique qui causent la faiblesse dans la maîtrise des apprentissages.

Ces faiblesses sont essentiellement dues au manque d'un outil véritable, dédié à la formation au pilotage, et qui assurerait une réelle continuité technologique entre les avions utilisés pour la formation et les avions utilisés pour le transport de passagers.

Ces insuffisances accumulées au fil des multiples étapes de formation d'un pilote, font le terreau idéal des incidents et des accidents qui surviennent au cours des carrières de bon nombre de ces pilotes, confrontés en vol à des situations inusitées et qui requièrent non seulement une plus grande maîtrise de la conduite de la machine, mais une connaissance très approfondie de toutes les facettes de réaction de son avion, dans des conditions et situations plus qu'anormales.

L'utilisation d'avions de types disparates et génériques, avec toutes leurs faiblesses technologiques, ainsi que des simulateurs de vol qui donnent une illusion d'optique au lieu de simuler, ne peuvent permettre de changer cette situation. Autrement dit, les simulateurs de vol actuels donnent une illusion d'optique au lieu de créer, par la simulation, des conditions permettant une réelle perception d'effets physiques. Il y a entre l'aviation légère et générale, et l'aviation commerciale et d'affaire, un gap technologique qui requiert une réponse urgente.

L'invention vise à pallier ces manques et de combler ce gap technologique. On connait du document EP 1 436 193 un avion pour la formation au pilotage qui comporte fuselage comprenant une cabine de pilotage, une voilure, un train d'atterrissage et un empennage. La voilure de cet avion est particulière et conçue notamment pour maximiser la stabilité de l'avion dans la direction latérale de l'avion jusqu'à de grands angles d'attaque, afin de permettre le contrôle de l'avion et d'éviter notamment des départs en vrille durant le vol, ou de sortir facilement de vrille lors d'exercices.

Le document WO 2008/054449 décrit un aéronef amphibien à trois coques comprenant une coque centrale située entre une coque extérieure tribord et une coque extérieure bâbord. La coque centrale supporte un fuselage.

Le document US 8523101 décrit un avion capable d'effectuer des décollages et des atterrissages courts, l'avion comprenant essentiellement un fuselage, une aile fixée au fuselage, un stabilisateur horizontal avant fixé au fuselage à l'extrémité avant du fuselage et au moins deux moteurs à réaction pour la propulsion.

L'invention propose notamment une alternative de conception d'avion plus performante et plus complète.

A cet effet l'invention concerne dans un premier temps un avion pour la formation au pilotage, ledit avion comportant notamment un fuselage qui s'étend suivant un axe longitudinal de l'avion, ledit fuselage comprenant une extrémité avant formant un nez d'avion et une extrémité arrière, ledit avion comportant une cabine de pilotage, une voilure, un train d'atterrissage, au moins un groupe turbopropulseur et un empennage.

L'avion est remarquable en ce qu'il comporte en outre deux becs canards symétriques fixés au fuselage en partie avant de l'avion, de part et d'autre du nez et sensiblement en amont de la cabine de pilotage. De plus, ledit empennage comporte deux éléments formant un V symétriques par rapport audit axe longitudinal de l'avion et ledit au moins un groupe turbopropulseur est situé au-dessus du fuselage en amont dudit empennage et dans un plan de symétrie comportant ledit axe longitudinal de l'avion, entre les deux éléments formant un V dudit empennage.

L'avion conforme à l'invention peut également comporter les caractéristiques suivantes, prises séparément ou en combinaison :
chacun des becs canard peut comporter un bord d'attaque de bec, un bord de fuite de bec et une extrémité courbée, entre deux extrémités de bord d'attaque de bec et bord de fuite de bec, chacun desdits bords d'attaque de canard comportant au moins un volet hyper sustentateur et chacun desdits bords de fuite de canard comportant éventuellement un volet à fente,
les éléments formant un V dudit empennage peuvent former entre eux un angle compris sensiblement entre 100° et 125 °,
chacun des éléments formant un V peut présenter une forme sensiblement triangulaire avec un bord d'attaque d'élément et un bord de fuite d'élément, ledit bord d'attaque d'élément étant orienté suivant une direction inclinée par rapport audit axe longitudinal de l'avion suivant un angle d'inclinaison compris sensiblement entre 100° et 160°,
chacun des éléments formant un V peut comporter des gouvernes de direction subdivisées et indépendantes,
ledit empennage peut comporter un dispositif biomimétique, positionné à ladite extrémité arrière du fuselage, prolongeant ladite extrémité arrière suivant l'axe longitudinal de l'avion, ledit dispositif biomimétique comportant des palettes articulées les unes par rapport aux autres autour d'un axe pivot perpendiculaire audit axe longitudinal de l'avion, entre une position rétractée suivant laquelle lesdites palettes sont positionnées les unes sur les autres et une position déployée suivant laquelle lesdites palettes forment un éventail, le dispositif biomimétique peut être monté pivotant autour d'un axe perpendiculaire audit axe longitudinal dudit avion,
ladite voilure peut comporter deux ailes symétriques en flèche, chacune des ailes présentant un profil sinusoïdal et comportant un bord d'attaque d'aile et un bord de fuite d'aile, qui s'étendent respectivement entre une extrémité de raccordement d'aile qui est raccordée au fuselage à travers un caisson par l'intermédiaire d'une nervure-entretoise d'emplanture, et une extrémité libre d'aile, et une gorge formant un couloir de Venturi peut être ménagée dans l'extrémité de raccordement, ladite gorge présentant une entrée de gorge à proximité du bord d'attaque d'aile et une sortie de gorge à proximité du bord de fuite d'aile, ladite gorge présentant une profondeur de gorge et une largeur de gorge, ladite largeur de gorge augmentant entre ladite entrée de gorge et ladite sortie de gorge,
ledit bord d'attaque d'aile peut présenter un bec d'extrémité qui peut être décalé, fixe ou piloté, les extrémités libres d'aile pouvant être courbées et, éventuellement, le bord de fuite d'aile pouvant comporter au moins un volet à fente,
chacune des ailes peut être équipée d'éléments de mesure de pression différentielle de la surpression à l'intrados versus la dépression à l'extrados et communiquant avec un calculateur pour assurer une surveillance de l'écoulement de l'air sur l'avion et délivrer une information positive ou négative de prise d'envol dans ladite cabine, ladite information étant relative à la variation de la pression différentielle assurant la prise d'envol,
l'avion peut comporter un nez d'avion dont le profil s'étend suivant une direction inclinée par rapport à l'axe longitudinal de l'avion, suivant un angle descendant, compris sensiblement entre 5° et 25°,
ledit groupe turbopropulseur peut comporter un dispositif d'entrainement d'une turbine faisant la transition entre une énergie électrique et une énergie fossile (en passant par les biocarburants) pour mettre en rotation une hélice apte à générer un flux d'air sortant orienté suivant une direction médiane sensiblement parallèle à l'axe longitudinal de l'avion entre lesdits éléments formant un V dudit empennage.

L'invention concerne dans un second temps une cabine de pilotage pour un avion tel que décrit ci avant, ladite cabine comportant un tableau de bord comprenant :
- un panneau de commande supérieur, s'étendant sensiblement au moins partiellement sur une paroi supérieure de ladite cabine, ledit panneau de commande supérieur concentrant des premiers dispositifs de commande du système électrique, hydraulique et pneumatique dudit avion, et
- un panneau de commande frontal, s'étendant sensiblement au moins partiellement sur une paroi avant de ladite cabine, comportant notamment des seconds dispositifs de commande de servitudes embarquées dudit avion et de protection électrique, ainsi qu'un indicateur de capacité de prise d'envol dudit avion, ledit indicateur délivrant une information positive ou négative de prise d'envol, générée par un calculateur à partir de données fournies par des éléments de mesure de variations de pression aérodynamique positionnés sous et / ou sur ladite voilure.

La cabine conforme à l'invention peut également comporter un dispositif de commande factice de rentrée et de sortie du train d'atterrissage.

Enfin, l'invention concerne un simulateur de vol, comportant une cabine telle que définie ci-dessus, pour un avion conforme à l'invention. Le simulateur présente la particularité de comprendre une cabine montée mobile en rotation sur un pied support, suivant le sens horaire ou suivant le sens antihoraire, suivant une vitesse de rotation calculée par un module de commande du simulateur en réponse aux actions d'un pilote sur les premiers ou seconds dispositifs de commande de ladite cabine.

Ainsi réalisée, l'invention offre à l'industrie de l'aéronautique une proposition de rupture d'avec l'approximation en matière de formation des pilotes d'avion, en proposant notamment un avion ayant pour mission spécifique la formation de pilote, l'avion étant équipé en conséquence.

L'invention permet ainsi d'améliorer drastiquement la sécurité dans l'exploitation de cet avion pouvant être considéré comme un « outil pédagogique » aérien.

L'avion conforme à l'invention apporte une efficacité aérodynamique distinctive aux limites de son domaine de vol, en conditions normales et en conditions dégradées. Les nouveaux objectifs pédagogiques portés par les outils didactiques d'un programme d'innovation aéronautique s'inscrivent dans une recherche d'une plus grande maitrise des réactions en situation de stress et une meilleure maitrise de la gestion des procédures, pour une reprise efficace et rapide du contrôle de l'appareil.

L'avion ou le simulateur conforme à l'invention permet aux centres de formation de pilotes de restaurer leur capacité d'offre de formation pour, à leur tour, répondre à la crise mondiale de pilotes de lignes dont l'impact affecte jusqu'à la livraison de nouveaux avions aux compagnies aériennes qui manquent cruellement d'équipages.

Pour faciliter cette amélioration, l'avion ou le simulateur permet de niveler le gap technologique qui minait la transition des pilotes de l'avion léger à l'avion de ligne.

D'autres avantages et caractéristiques de l'invention apparaîtront à l'examen de la description détaillée d'un mode de mise en œuvre nullement limitatif, et des dessins annexés, sur lesquels :
[Fig. 1] est une vue de dessus d'un avion conforme à l'invention,
[Fig. 2] est une vue de coupe partielle d'une aile de l'avion montré en figure 1, selon le plan II-II,
[Fig. 3] est une vue de profile avant de l'avion montré en figure 1,
[Fig. 4] est une vue de profile arrière de l'avion montré en figure 1,
[Fig. 5] est une vue de dessus d'une partie arrière d'un avion conforme à un second mode de réalisation de l'invention,
[Fig. 6] est une vue de côté de la partie arrière montrée en figure 5,
[Fig. 7] est une vue de dessus d'une aile d'avion conforme à un autre mode de réalisation de l'avion conforme l'invention,
[Fig. 8] est une vue en coupe suivant le plan VIII- VIII indique en figure 7, illustrant une nervure-entretoise qui permet de fixer une aile de l'avion côté emplanture,
[Fig. 9] est une vue de dessus d'un bec canard d'un avion conforme à un autre mode de réalisation de l'invention,
[Fig. 10] est une vue de dessus d'une partie avant d'un avion conforme à l'invention, illustrant en particulier une cabine de pilotage de l'avion,
[Fig. 11] est une vue de face d'un tableau de bord de la cabine montrée en figure 9,
[Fig. 12] est une vue en perspective d'un support pour une cabine de pilotage d'un simulateur de vol qui n'est pas revendiqué,
[Fig. 13] est une vue de côté du support montré en figure 12,
[Fig. 14] est une vue de dessous du support montré en figures 12 et 13.

Dans la description qui suit, les termes « inférieur », « supérieur », « gauche », « droite », « haut », « bas » etc... sont utilisés en référence aux dessins pour une plus grande facilité de compréhension. Ils ne doivent pas être compris comme étant des limitations de la portée de l'invention.

L'avion qui va maintenant être présenté est un avion pour l'apprentissage du pilotage, c'est-à-dire exclusivement dédié à la formation initiale des pilotes d'avion commerciaux (qui se destinent à l'exercice du métier de pilote de ligne. L'avion qui va être décrit est léger (moins de 2700 kg), comporte trois places dans une cabine plus spacieuse que les cabines usuelles dans les avions légers et présente un profil aérodynamique incomparable, doté de quatre plans.

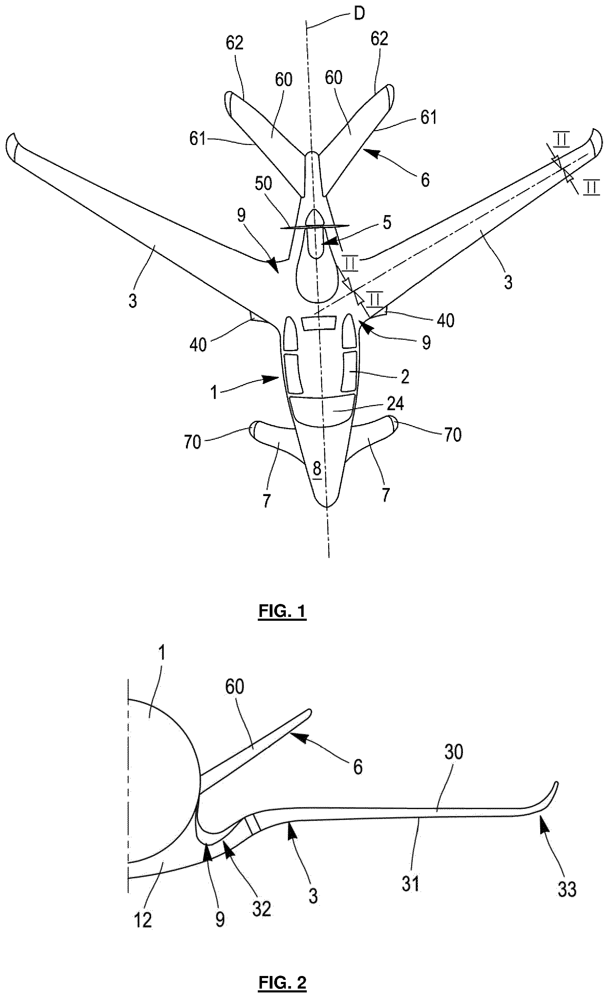

L'avion illustré sur les figures 1, 3 et 4 comporte, de façon classique, un fuselage 1 dans lequel est ménagée une cabine de pilotage 2 (à l'avant de l'avion).

De part et d'autre du fuselage 1, s'étendent deux ailes 3 gauche et droite, constituant la voilure de l'avion.

Sous le fuselage 1, est prévu un train d'atterrissage 4 fixe de type tricycle, comportant :
- deux jambes fixes 40, équipées ou non de systèmes amortisseurs, placées sensiblement en arrière du centre de gravité de l'avion, chacune des jambes étant équipée à son extrémité libre d'une ou plusieurs roues, et
- une jambe fixe 41, équipée ou non de systèmes amortisseurs, placée à l'avant de l'avion, sous l'extrémité avant de la cabine 2, équipée également d'une ou de plusieurs roues à son extrémité libre.

L'avion conforme à l'invention comporte également un groupe turbopropulseur 5 placé au-dessus du fuselage, derrière les ailes 3 de la voilure.

En outre, l'avion comporte un empennage 6, à l'extrémité arrière du fuselage, et conformément à l'invention, il comporte deux becs canards 7, à l'extrémité avant du fuselage (donc en partie avant de l'avion).

Chacun des éléments énoncés ci-avant portant les références 1 à 7 va maintenant être décrit plus en détails, en partant de la partie avant de l'avion vers la partie arrière de l'avion.

En premier lieu, l'extrémité avant de l'avion comporte un nez 8 derrière lequel se trouve la cabine de pilotage 2.

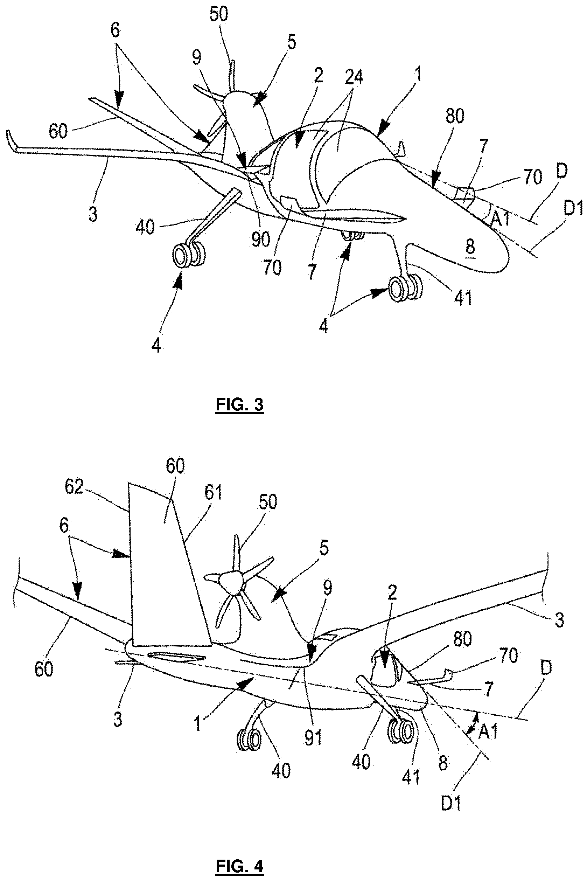

Le nez 8 présente un profil dit « descendant », visible plus particulièrement en figures 3 et 4.

Ce profil descendant sert de balancier, de levier d'équilibrage aérodynamique sur l'axe longitudinal D de l'avion autour de l'axe de tangage (non représenté).

Le nez 8 est formé par l'extrémité avant du fuselage : il prend naissance à la base de la cabine 2 et se termine à l'extrémité libre avant de l'avion. La paroi qui forme le nez présente une partie supérieure 80 qui s'étend suivant une direction D1 (voir figures 3 ou 4) inclinée vers le bas, suivant ainsi un angle A1 descendant par rapport à l'axe longitudinal D de l'avion (montré en figure 1).

L'angle A1 est sensiblement compris entre 5° et 25°.

Sur la paroi du nez 8 de l'avion, devant la cabine 2, sont fixés les deux becs canards 7 : ce sont des ailes de plus petite envergure que les ailes 3 de la voilure, qui sont réalisées symétriques par rapport à l'axe longitudinal D de l'avion.

Les becs canards 7 permettent de protéger l'avion d'un décrochage aérodynamique de la voilure principale tout en contribuant à l'augmentation de la portance en allégeant la charge de la masse de l'appareil sur la seule surface de la voilure principale.

Comme on peut le voir en particulier sur les figures 3 et 4, chacun des becs canards 7 comporte une extrémité courbée 70 de type winglet, qui peut être fixe ou montée articulée, comme les palettes 10 et 11 qui seront décrites par la suite.

Cette extrémité courbée permet de gagner en efficacité en réduisant la trainée induite par la portance sans augmenter l'envergure de l'aile.

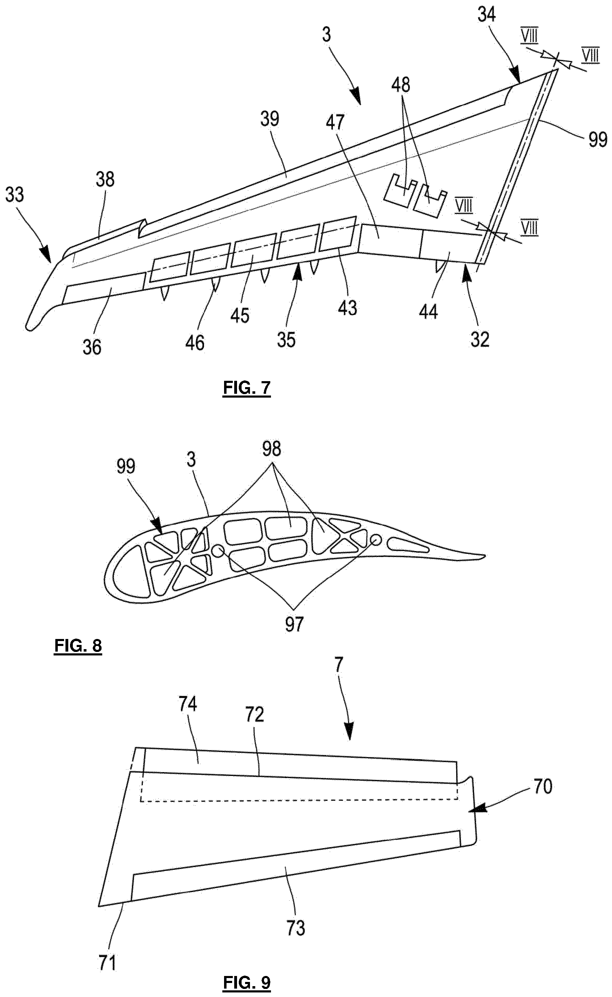

Les becs canard 7 de l'avion conforme à l'invention peuvent également comporter d'autres caractéristiques montrées notamment en figure 9.

La figure 9 montre un bec canard gauche 7 de l'avion (le bec canard gauche est celui situé à gauche de l'avion quand on se situe dans la cabine 2 et que l'on regarde vers l'avant de l'avion).

Le bec canard 7 comporte un bord d'attaque 71 (dit « de bec » pour e différencier du bord d'attaque d'une aile de la voilure, décrite par la suite) et un bord de fuite 72 (dit « de bec », également pour les mêmes raisons).

Le bord d'attaque de bec 71 comporte un volet hypersustentateur 73, autrement appelé « bec de bord d'attaque », permettant d'augmenter le coefficient de portance de l'avion à basse vitesse et abaisser ainsi la vitesse de décrochage (les volets hypersustentateurs permettent de réduire les vitesses de décollage et d'atterrissage, ce qui diminue les distances nécessaires et améliore la sécurité).

A titre d'information, l'avion conforme à l'invention permet de décrocher à environ 55 km/h alors que les avions légers décrochent usuellement entre 100 et 120 km/h.

Le bord de fuite de bec 72 comporte, quant à lui, un volet à fente 74. Le volet à fente(s) augmente la portance de l'avion en augmentant la courbure de l'aile, en étant articulé le long d'un de ses bords sur le bord de fuite. La présence d'une ou plusieurs fentes permet un soufflage de "l'extrados" du volet, ce qui permet d'y diminuer les risques de formation de turbulences, et de décrochage de la couche limite.

Ces éléments sont placés à une distance stratégique du bord d'attaque de la voilure principale pour ne pas en perturber le flux.

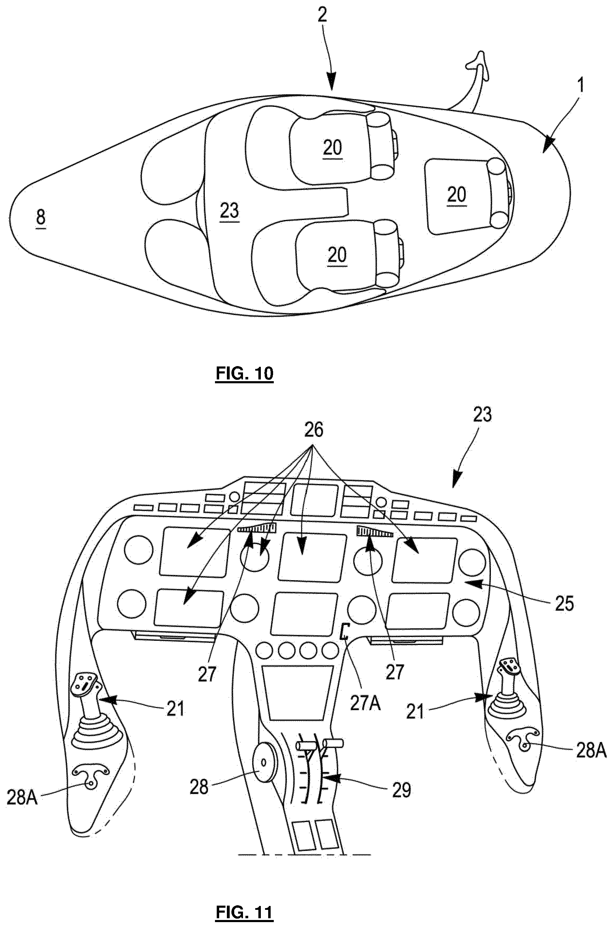

Derrière les becs canards 7, se trouve la cabine de pilotage 2 qui est davantage représentée en figure 10.

Comme on peut le voir, la cabine 2 comporte trois sièges 20, dont deux sièges avant 20 disposés côte à côte en face du tableau de bord, et un siège arrière 20 disposé derrière les deux sièges avant 20, en face de l'espace séparant les deux sièges avant 20.

La cabine 2 comporte, comme les avions commerciaux, des parois vitrées 24.

La cabine 2 est équipée de commandes de vol électriques déployées en deux versions : une version avec une manette 21 et une autre avec un volant sur pilonne central (voir figure 11 - seule la version avec manette est illustrée). Le tableau de bord 23 que la cabine comporte est illustré également plus précisément en figure 11.

Le contrôle directionnel du train avant 4 est assuré à la fois par un volant manuel 19, placé à côté de la manette de contrôle du pilotage (voir figure 11) pour le roulage lent et par des palonniers (pédales situées au sol de la cabine, non représentées) au décollage et à l'atterrissage.

Le tableau de bord 23 comporte un panneau de commande frontal 25 équipé d'une série d'écrans de contrôle 26 qui est équivalente à celle des avions de transport commercial, ainsi qu'une instrumentation classique analogique pour l'exploration et l'intégration des apprentissages fondamentaux du pilotage.

La cabine est également équipée d'un plafonnier, c'est-à-dire un panneau supérieur de commande, qui concentre les dispositifs de commande des systèmes électriques, hydrauliques et pneumatiques des éléments de l'avion, ainsi que quelques commandes de servitudes embarquées, ainsi que des protections électriques.

Conformément à l'invention, le tableau de bord comporte un indicateur 27, indiquant au pilote en apprentissage si l'avion est en capacité de prendre son envol.

Pour ce faire, l'indicateur délivre une information visuelle, dans le cadre de notre exemple, qui est positive ou négative.

L'information positive ou négative est générée par un calculateur (non illustré) à partir de données de mesure de variations de pression aérodynamique (c'est-à-dire une dépression ou une surpression) à partir de capteurs positionnés sous et /ou sur la voilure de l'avion (les capteurs n'ont pas été illustrés).

L'information visuelle générée par l'indicateur 27 est par exemple une échelle lumineuse.

Ainsi, cela se traduit par un affichage, sur le tableau de bord 23, de l'interprétation de la delta pression qui illustre l'établissement de la capacité d'envol et de tenue en vol de l'aéronef. Cette caractéristique particulière de la cabine de l'avion conforme à l'invention permet d'éliminer le risque d'accidents liés à la contradiction entre les paramètres de vol affichés au décollage et la réponse aux commandes ne permettant pas l'envol.

La cabine 2 de l'avion conforme à l'invention comporte également d'autres particularités : notamment elle comporte un dispositif de commande factice 28 de rentrée ou de sortie du train d'atterrissage et un volant de trime automatique et à contrôle manuel 42.

En effet, comme il a été expliqué, le train d'atterrissage 4 de l'avion décrit et illustré est fixe. Néanmoins, un pilote en apprentissage doit se familiariser avec les systèmes de commandes des avions commerciaux. Aussi, la cabine de l'avion école conforme à l'invention est équipée de tels moyens de commande, ces derniers n'étant toutefois reliés à rien (même si sur le tableau de bord les indications de manœuvre de train de rentrée, de sortie et de transit fonctionnent).

Le dispositif de commande factice 28 est situé sur la base du tableau de bord frontal, légèrement à droite du centre (voir figure 11).

La cabine peut également être équipée d'un autre dispositif de commande fictif de pas d'hélice.

Derrière la cabine 2, de part et d'autre du fuselage 1, se trouve la voilure avec ses deux ailes 3 symétriques en flèche. Autrement dit, les deux ailes 3 forment un angle non perpendiculaire avec l'axe longitudinal D de l'avion. L'angle des ailes 3 avec l'axe longitudinal D de l'avion est sensiblement de 60 °.

L'envergure des ailes 3 est sensiblement de 13,5 m (au lieu d'une envergure comprise usuellement entre 7 et 9 m pour des avions légers).

Chacune des ailes 3 est raccordée au fuselage 1 par l'intermédiaire d'un caisson 12 qui se situe sous le fuselage 1, au centre de celui-ci, et fait la jonction entre l'aile gauche 3 et l'aile droite 3 (voir figure 2). La fixation des deux ailes 3 se fait par l'intermédiaire de nervures-entretoises d'emplanture 99 (voir plus loin).

Le caisson 12 est équipé pour limiter le transfert des chocs dans la structure du fuselage pour amortir les efforts à l'atterrissage et limiter leur transfert au fuselage.

Chacune des deux ailes 3 présente un profil sinusoïdal, montré en figure 2 : en effet, la coupe d'une aile 3 montre que l'aile 3 ne présente pas de paroi plane d'une extrémité à l'autre: la paroi supérieure 30 et la paroi inférieure 31 suivent une courbe sinusoïdale, c'est-à-dire une courbe qui monte légèrement à partir d'une première extrémité d'aile 32 (de raccordement au caisson 12), puis redescend légèrement, reste sensiblement plane et remonte en direction de la seconde extrémité 33 de l'aile 3.

La seconde extrémité 33 de l'aile 3 est l'extrémité libre de l'aile 3. Comme pour les becs canards, cette extrémité libre 33 est courbée vers le haut, de type winglet, pour gagner en efficacité en réduisant la trainée induite par la portance sans augmenter l'envergure de l'aile.

La figure 7 montre un exemple d'aile 3 plus en détails.

Chacune des ailes 3 comporte un bord d'attaque d'aile 34 et un bord de fuite d'aile 35 qui s'étendent tous deux entre l'extrémité 32 de raccordement de l'aile 3 sur le caisson 12, à travers la nervure-entretoise d'emplanture 99 de fixation d'aile 37, et l'extrémité libre 33, recourbée vers le haut.

Le bord de fuite d'aile 35 comporte au moins un aileron extérieur basse vitesse 36 et le bord d'attaque d'aile 34 présente un bec d'extrémité 38.

Le bord d'attaque d'aile 34 comporte en outre un volet hypersustentateur 39, encore appelé bec de bord d'attaque.

Le bord de fuite d'aile 35 comporte également des volets glissants à fentes 43, des volets intérieurs à fente 44 sur chaque demi-aile, cinq panneaux de spoilers briseurs de portance 45, des rails cinématiques 46 de déploiement des volets, des ailerons intérieurs haute vitesse 47 et des panneaux aérofreins 48.

La figure 8 montre une entretoise d'emplanture 99 qui permet de fixer l'aile 3 au caisson central 12 de l'avion. Cette nervure-entretoise 99 est située à l'extrémité 32 de l'aile 3 et est illustrée en coupe, pour mieux représenter son mode de réalisation.

Il devra être compris que cette entretoise 99 pourrait être réalisée différemment sans sortir du cadre de l'invention.

Dans le cadre de cet exemple, l'entretoise d'emplanture 99 présente des évidements internes 98 pouvant présenter différentes formes : des formes sensiblement triangulaires, rectangulaires, ovoïdales etc. Ces évidements 98 permettent d'alléger l'entretoise 99, tout en créant un maillage de rigidification.

Ce mode de réalisation contribue notamment à l'absorption des chocs lors de l'atterrissage.

On peut observer deux trous traversants de forme circulaire 97, permettant de livrer passage à une pièce de fixation (non illustrée), la pièce de fixation permettant de lier l'aile 3 au caisson 12.

Il est prévu, conformément à un mode de réalisation avantageux de l'invention, de réaliser une gorge 9 au niveau de l'extrémité de raccordement 32 de l'aile 3 sur le caisson 12. Cette gorge peut être réalisée par la forme de la paroi de l'extrémité de l'aile 3.

La gorge 9 présente une entrée 90 (figure 3) à proximité du bord d'attaque d'aile 34 et une sortie 91 (figure 4) à proximité du bord de fuite d'aile 35.

La gorge 9 présente une profondeur de gorge et une largeur de gorge.

La largeur de gorge augmente entre l'entrée 90 et la sortie 91 de la gorge 9. De cette façon, au niveau du creux formé entre l'aile 3 et le fuselage (appelé également creux de Karman), la gorge 9 forme un couloir pour l'air d'écoulement aérodynamique à effet Venturi sur l'extrados (c'est-à-dire un phénomène de la dynamique des fluides où il y a formation d'une dépression dans une zone où les particules de fluides sont accélérées), ce qui a pour effet de minimiser des turbulences qui s'y développent usuellement.

Il est également prévu d'équiper les ailes d'éléments de mesure, de type détecteur de pression électronique, capteur de pression absolue, capteur de pression à cellule métallique et aussi à membrane (à titre d'exemple) qui permettent de surveiller l'écoulement de l'air en mesurant la pression dynamique de l'écoulement de l'air en milieu ambiant. Il s'agit de mesurer la variation de pression sur l'extrados et l'intrados, la valeur de la dépression donnant la portance qui détermine la capacité d'envol et de tenue en l'air. Ces éléments sont placés à une distance prédéterminée de la ligne de référence aérodynamique de l'avion, en l'occurrence le centre de poussée sur l'axe de tangage. Les éléments de mesure peuvent être placés dans une zone entre le longeron avant et le longeron arrière, répartis entre le saumon de l'aile et l'emplanture.

Ce sont ces éléments de mesure qui transmettent des informations au calculateur agissant sur l'indicateur visuel de capacité d'envol 27 placé dans la cabine de pilotage 2.

Il va maintenant être fait référence au groupe turbopropulseur 5.

Ce dernier est situé au-dessus du fuselage 1, derrière les ailes 3 de la voilure, en amont dudit empennage 6.

Le groupe turbopropulseur 5 comporte un dispositif d'entrainement d'une turbine qui fait la transition entre l'énergie électrique et l'énergie fossile - en passant par les biocarburants - pour mettre en rotation une hélice 50. Le groupe turbopropulseur 5 comporte également l'hélice 50 apte à générer un flux d'air orienté vers l'empennage 6 de l'avion.

Ce mode de réalisation présente l'avantage de faciliter la manœuvre de l'avion. En effet, il assure une efficace alimentation des surfaces de contrôle en tangage et en lacet, en évolution aux basses vitesses dans des configurations qui imposent des angles d'attaque très forts. Le flux d'air n'est pas perturbé avant d'atteindre les gouvernes et la rotation de l'hélice ne perturbe pas le flux qui alimente les profils des plans sustentateurs.

L'empennage 6 situé derrière le groupe turbopropulseur 5 comporte deux éléments 60 formant un V, orientés vers le haut, les éléments 60 étant symétriques par rapport à l'axe longitudinal D de l'avion.

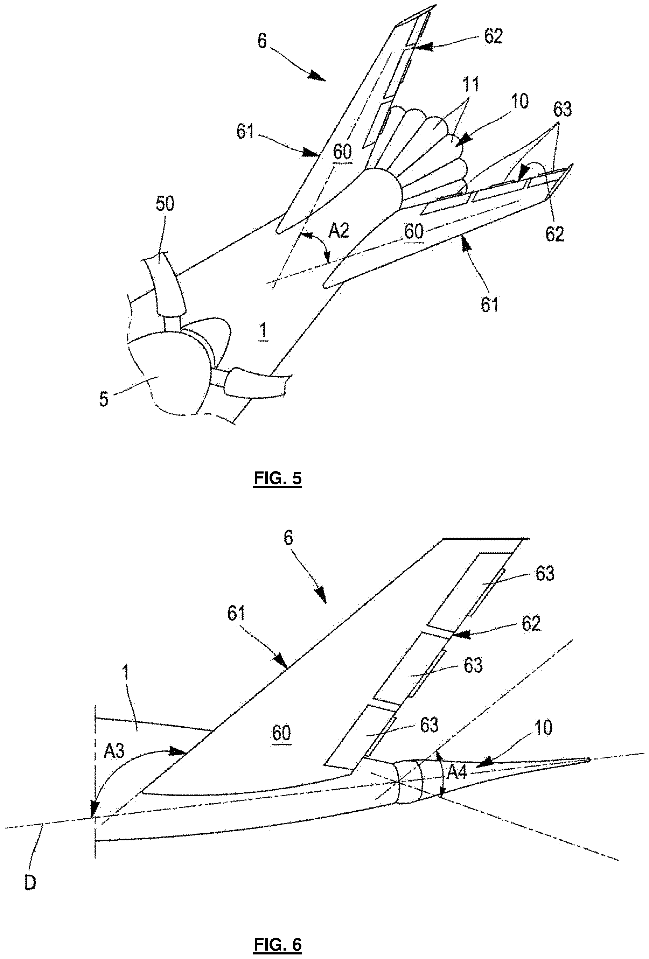

L'angle A2, montré en figure 5, formé par les deux éléments 60 symétriques est sensiblement compris entre 100° et 125°.

De plus, les éléments 60 présentent chacun une forme sensiblement triangulaire avec un bord d'attaque d'élément 61 et un bord de fuite d'élément 62 (voir en particulier la figure 5 ou 6).

Le bord d'attaque d'élément 61 est incliné vers l'arrière, et forme un angle A3 avec l'axe longitudinal de l'avion qui est sensiblement compris entre 100° et 160°.

Le bord de fuite d'élément 62 comporte des gouvernes de direction 63 qui sont subdivisées et indépendantes dans leur fonctionnement. Cela permet d'assurer une réponse directionnelle malgré la panne d'un segment.

Il est à noter que le flux d'air généré par le groupe turbopropulseur 5 est orienté sensiblement en grande partie entre les éléments 60 formant un V (on prévoit que la direction médiane du flux d'air généré se trouve entre les deux éléments formant un V, théoriquement dans un plan de symétrie entre les deux éléments 60).

Conformément à un mode de réalisation avantageux de l'avion conforme à l'invention, il est prévu d'équiper l'empennage 6 d'un dispositif biomimétique 10 articulé, qui reproduit la queue d'un oiseau.

Ce dispositif biomimétique 10, qui est en outre aéroélastique, s'ajoute aux gouvernes de profondeur et en renforce l'efficacité : il pilote les axes de roulis et de lacet autour de l'axe longitudinal de l'avion, par le biais d'une assistance d'une intelligence artificielle mise en œuvre dans le système de commande de l'appareil. Cette veille intuitive est appuyée par des microcentrales inertielles, le tout piloté par des algorithmes de l'Intelligence Artificielle.

Le dispositif biomimétique 10 est prévu à l'extrémité arrière du fuselage 1, et prolonge cette extrémité suivant l'axe longitudinal D de l'avion (voir figure 6).

Le dispositif biomimétique 10 comporte des palettes 11 articulées les unes par rapport aux autres, autour d'un axe pivot qui est perpendiculaire à l'axe longitudinal D, entre une position rétractée (voir figure 6) et une position déployée (voir figure 5).

Suivant la position rétractée, les palettes 11 sont positionnée les unes sur les autres et suivant la position déployée, les palettes 11 forment un éventail, à la façon de la queue d'un oiseau.

Le dispositif biomimétique peut également pivoter pour orienter les palettes 11 vers le haut ou vers le bas, suivant un angle A4 montré en figure 6 et sensiblement de plus ou moins 35° au-dessus ou en dessous de l'axe longitudinal D de l'avion.

Grâce à tous les éléments présentés ci avant, qui font de cet avion un avion complet pour l'apprentissage d'un pilote destiné à une carrière de pilote de ligne, l'avion présente des performances optimisées par rapport à celles proposées par les avions d'apprentissage classiques (génériques), sans profil pédagogique spécifique.

De plus, l'avion conforme à l'invention est plus sécurisant.

La mise en œuvre d'un module d'intelligence artificielle pour la commande de certains éléments n'a pas été décrite. L'avion conforme à l'invention, équipé d'un tel module, permet de commander toutes sortes de réponses, et notamment celle du déploiement et du mouvement du dispositif biomimétique, ou celui des différents éléments équipant les ailes 3 ou les becs canards 7.

En outre, la description concerne également un simulateur de vol qui n'est pas revendiqué mais qui complète le dispositif pédagogique, comportant une cabine identique à celle de l'avion conforme à l'invention.

La cabine d'un tel simulateur est montée mobile en rotation sur un pied support 13, suivant le sens horaire ou suivant le sens antihoraire, suivant une vitesse de rotation calculée par un module de commande du simulateur en réponse aux actions d'un pilote sur les premiers ou seconds dispositifs de commande de ladite cabine.

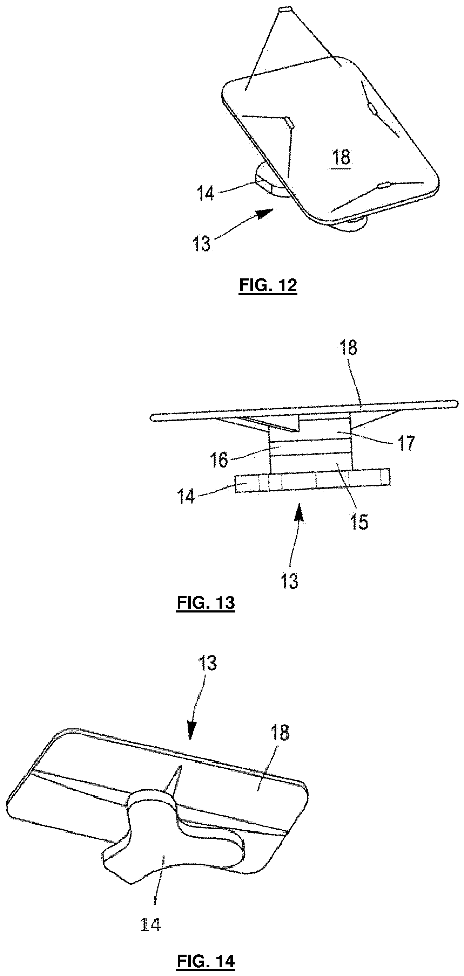

Le pied support 13 d'un tel simulateur est notamment montré en figures 12à 14.

Le pied support 13 comporte un support principal 14, sensiblement en forme de trèfle à trois feuilles, apte à être fixé au sol.

Le support principal 14 est surmonté d'un pied cylindrique 15 (voir figure 13).

Le pied cylindrique 15 comporte une première roue 16 équipée des systèmes d'entrainement en rotation de parties supérieures du pied support 13.

Une seconde roue réceptrice 17 reçoit les informations de commande de rotation horaire et antihoraire pour la mise en rotation sur trois cent soixante degrés de la cabine pour la combinaison des mouvements aux fins d'une meilleure simulation.

Enfin, la seconde roue est surmontée d'un plateau support 18, sur lequel peuvent être montés des vérins hydrauliques classiques de simulateur, pour piloter les mouvements de la cabine du simulateur.

Il est à noter que tous les systèmes de simulation de vol existants de niveau professionnel sont posés sur des vérins hydrauliques qui sont à leur tour fixés au sol. Cette configuration limite drastiquement les mouvements que l'appareil peut faire autour de ses points d'attache et par la même occasion, la capacité de simulation. Il est impossible de donner à la simulation réalisée dans ces conditions, la capacité de générer et de transmettre aux pilotes en formation, la moindre perception sensorielle des effets résultant des forces appliquées à la simulation.

Le simulateur est doté d'une liberté sur ses fixations qui lui confère la capacité de rotation sur trois cent soixante degrés d'azimuts dans le sens horaire tout comme dans le sens inverse et à des vitesses variables et contrôlables.

Cette différenciation novatrice ouvre la voie à la simulation de nouvelle génération qui va permettre enfin d'induire la possibilité, pour le pilote entrainé, de développer des capacités de perception de réelles sensations physiques des effets des forces appliquées dans les manœuvres d'évolution. Ce simulateur ouvre une ère nouvelle de la simulation de vol en ajoutant à la simulation, qui jusque-là n'offrait qu'une illusion d'optique, une véritable capacité de générer une perception sensorielle de l'effet des efforts résultants.

## Revendications

1. Avion pour la formation au pilotage, ledit avion comportant notamment un fuselage (1) qui s'étend suivant un axe longitudinal (D) de l'avion, ledit fuselage (1) comprenant une extrémité avant formant un nez d'avion (8) et une extrémité arrière, ledit avion (1) comportant une cabine de pilotage (2), une voilure (3), un train d'atterrissage (4), au moins un groupe turbopropulseur (5) et un empennage (6), l'avion comportant en outre deux becs canards (7) symétriques par rapport à l'axe longitudinal (D), fixés au fuselage (1) en partie avant de l'avion, de part et d'autre du nez (8) et sensiblement en amont de la cabine de pilotage (2), ledit empennage (6) comportant deux éléments (60) formant un V, symétriques par rapport audit axe longitudinal (D) de l'avion, et ledit au moins un groupe turbopropulseur (5) étant situé au-dessus du fuselage (1) en amont dudit empennage (6) et dans un plan de symétrie comportant ledit axe longitudinal (D) de l'avion, entre les deux éléments (60) formant un V dudit empennage (6).

2. Avion selon la revendication 1, **caractérisé en ce que** chacun des becs canard (7) comporte un bord d'attaque de bec (71), un bord de fuite de bec (72) et une extrémité courbée (70), entre deux extrémités de bord d'attaque de bec (71) et de bord de fuite de bec (72), chacun desdits bords d'attaque de bec (71) comportant au moins un volet hypersustentateur (73) et chacun desdits bords de fuite de bec (72) comportant éventuellement un volet à fente (74).

3. Avion selon la revendication 1 ou 2, **caractérisé en ce que** les éléments (60) formant un V dudit empennage (6) forment entre eux un angle (A2) compris sensiblement entre 100° et 125°.

4. Avion selon la revendication 1, 2 ou 3, **caractérisé en ce que** lesdits éléments (60) formant un V présentent chacun une forme sensiblement triangulaire avec un bord d'attaque d'élément (61) et un bord de fuite d'élément (62), ledit bord d'attaque d'élément (61) étant orienté suivant une direction inclinée par rapport audit axe longitudinal (D) de l'avion suivant un angle d'inclinaison (A3) compris sensiblement entre 100° et 160°.

5. Avion selon l'une quelconque des revendications précédentes, **caractérisé en ce que** chacun des éléments (60) formant un V comporte des gouvernes de direction (63) subdivisées et indépendantes.

6. Avion selon l'une quelconque des revendications précédentes, **caractérisé en ce que** ledit empennage (6) comporte un dispositif biomimétique (10) positionné à ladite extrémité arrière du fuselage (I), prolongeant ladite extrémité arrière suivant l'axe longitudinal (D) de l'avion, ledit dispositif biomimétique (10) comportant des palettes (II) articulées les unes par rapport aux autres autour d'un premier axe pivot perpendiculaire audit axe longitudinal (D) de l'avion, entre une position rétractée suivant laquelle lesdites palettes (11) sont positionnées les unes sur les autres et une position déployée suivant laquelle lesdites palettes (11) forment un éventail.

7. Avion selon la revendication 6, **caractérisé en ce que** le dispositif biomimétique (10) est monté pivotant autour d'un second axe perpendiculaire audit axe longitudinal (D) dudit avion.

8. Avion selon l'une quelconque des revendications précédentes, **caractérisé en ce que** ladite voilure comporte deux ailes (3) symétriques en flèche, chacune des ailes (3) présentant un profil sinusoïdal et comportant un bord d'attaque d'aile (34) et un bord de fuite d'aile (35), qui s'étendent respectivement entre une extrémité de raccordement d'aile (32) qui est raccordée au fuselage (1) à travers un caisson (12) par l'intermédiaire d'une nervure-entretoise d'emplanture (99), et une extrémité libre d'aile (33), **en ce qu'**une gorge (9) formant un couloir de Venturi est ménagée le long de l'extrémité de raccordement (32), ladite gorge (9) présentant une entrée de gorge (90) à proximité du bord d'attaque (34) d'aile et une sortie de gorge (91) à proximité du bord de fuite d'aile (35), ladite gorge (9) présentant une profondeur de gorge et une largeur de gorge, ladite largeur de gorge augmentant entre ladite entrée de gorge (90) et ladite sortie de gorge (91).

9. Avion selon la revendication 8, **caractérisé en ce que** ledit bord d'attaque d'aile (34) présente un bec d'extrémité (38), **en ce que** les extrémités libres d'aile (33) sont courbées et **en ce que**, éventuellement, le bord de fuite d'aile (35) comporte au moins un aileron extérieur basse vitesse (36).

10. Avion selon l'une quelconque des revendications 8 ou 9, **caractérisé en ce que** chacune des ailes (3) est équipée d'éléments de mesure de pression différentielle de la surpression à l'intrados versus la dépression à l'extrados et communiquant avec un calculateur pour assurer une surveillance de l'écoulement de l'air et délivrer une information positive ou négative de prise d'envol.

11. Avion selon l'une quelconque des revendications précédentes, **caractérisé en ce qu'**il comporte un nez d'avion (8) dont le profil s'étend suivant une direction (DI) inclinée par rapport à l'axe longitudinal (D) de l'avion, suivant un angle descendant, compris sensiblement entre 5° et 25°.

12. Avion selon l'une quelconque des revendications précédentes, **caractérisé en ce que** ledit groupe turbopropulseur (5) comporte un dispositif d'entraine-ment d'une turbine faisant la transition entre une énergie électrique et une énergie fossile pour mettre en rotation une hélice (50) apte à générer un flux d'air sortant orienté suivant une direction médiane sensiblement parallèle à l'axe longitudinal (D) de l'avion entre lesdits éléments (60) formant un V dudit empennage (6).

13. Avion selon l'une quelconque des revendications précédentes, comprenant une cabine comportant un tableau de bord (23) comprenant :
- un panneau de commande supérieur, s'étendant sensiblement au moins partiellement sur une paroi interne supérieure de ladite cabine (2), ledit panneau de commande supérieur concentrant des premiers dispositifs de commande du système électrique, hydraulique et pneumatique dudit avion, et
- un panneau de commande frontal (25), s'étendant sensiblement au moins partiellement sur une paroi avant de ladite cabine (2), comportant notamment des seconds dispositifs de commande de servitudes embarquées (26) dudit avion et de protection électrique, ainsi qu'un indicateur (27) de capacité de prise d'envol dudit avion, ledit indicateur (27) délivrant une information positive ou négative de prise d'envol, générée par un calculateur à partir de données fournies par des éléments de mesure de variations de pression aérodynamique positionnés sous et/ou sur ladite voilure (3).

14. Avion selon la revendication 13, dans lequel la cabine comporte un dispositif (28) de commande factice de rentrée et de sortie du train d'atterrissage (4).

## Patentansprüche

1. Flugzeug für die Pilotenausbildung, wobei das Flugzeug insbesondere einen Rumpf (1) umfasst, der sich entlang einer Längsachse (D) des Flugzeugs erstreckt, wobei der Rumpf (1) ein vorderes Ende bildet, das eine Flugzeugnase (8) ausbildet, und ein hinteres Ende aufweist, wobei das Flugzeug (1) ein Cockpit (2), eine Tragflächenanordnung (3), ein Fahrwerk (4), mindestens ein Turboprop-Triebwerk (5) und ein Leitwerk (6) umfasst, wobei das Flugzeug ferner zwei Canard-Vorflügel (7) umfasst, die symmetrisch zur Längsachse (D) angeordnet sind, am Rumpf (1) im vorderen Bereich des Flugzeugs, auf beiden Seiten der Nase (8) und im Wesentlichen stromaufwärts des Cockpits (2) befestigt sind, wobei das Leitwerk (6) zwei Elemente (60) umfasst, die eine V-Form bilden und symmetrisch zur Längsachse (D) des Flugzeugs angeordnet sind, und wobei das mindestens eine Turboprop-Triebwerk (5) oberhalb des Rumpfes (1), stromaufwärts des Leitwerks (6) und in einer Symmetrieebene angeordnet ist, die die Längsachse (D) des Flugzeugs enthält, zwischen den beiden Elementen (60), die das V-förmige Leitwerk (6) bilden.

2. Flugzeug nach Anspruch 1, **dadurch gekennzeichnet, dass** jeder der Canard-Vorflügel (7) eine Vorflügelvorderkante (71), eine Vorflügelhinterkante (72) und ein gekrümmtes Endstück (70) aufweist, zwischen zwei Enden der Vorflügelvorderkante (71) und der Vorflügelhinterkante (72), wobei jede der Vorflügelvorderkanten (71) mindestens eine Hochauftriebsklappe (73) aufweist und jede der Vorflügelhinterkanten (72) gegebenenfalls eine Spaltklappe (74) aufweist.

3. Flugzeug nach Anspruch 1 oder 2, **dadurch gekennzeichnet, dass** die Elemente (60), die das V-förmige Leitwerk (6) bilden, einen Winkel (A2) zwischen etwa 100° und 125° aufweisen.

4. Flugzeug nach Anspruch 1, 2 oder 3, **dadurch gekennzeichnet, dass** die Elemente (60), die das V bilden, jeweils eine im Wesentlichen dreieckige Form mit einer Elementvorderkante (61) und einer Elementhinterkante (62) aufweisen, wobei die Elementvorderkante (61) in einer geneigten Richtung relativ zur Längsachse (D) des Flugzeugs mit einem Neigungswinkel (A3) zwischen etwa 100° und 160° ausgerichtet ist.

5. Flugzeug nach einem der vorhergehenden Ansprüche, **dadurch gekennzeichnet, dass** jedes der Elemente (60), die das V bilden, unterteilte und unabhängige Seitenruder (63) aufweist.

6. Flugzeug nach einem der vorhergehenden Ansprüche, **dadurch gekennzeichnet, dass** das Leitwerk (6) eine biomimetische Vorrichtung (10) umfasst, die an dem hinteren Ende des Rumpfes (1) positioniert ist und dieses entlang der Längsachse (D) des Flugzeugs verlängert, wobei die biomimetische Vorrichtung (10) Lamellen (11) umfasst, die um eine erste Drehachse, die senkrecht zur Längsachse (D) des Flugzeugs steht, relativ zueinander schwenkbar sind, zwischen einer eingefahrenen Position, in der die Lamellen (11) übereinander angeordnet sind, und einer ausgefahrenen Position, in der die Lamellen (11) einen Fächer bilden.

7. Flugzeug nach Anspruch 6, **dadurch gekennzeichnet, dass** die biomimetische Vorrichtung (10) um eine zweite Achse schwenkbar montiert ist, die senkrecht zur Längsachse (D) des Flugzeugs steht.

8. Flugzeug nach einem der vorhergehenden Ansprüche, **dadurch gekennzeichnet, dass** die Tragflächenanordnung zwei symmetrische Pfeilflügel (3) umfasst, wobei jeder Flügel (3) ein sinusförmiges Profil aufweist und eine Flügelvorderkante (34) sowie eine Flügelhinterkante (35) umfasst, die sich jeweils zwischen einem Flügelwurzelende (32), das über einen Kastenholm (12) mittels eines Flügelwurzelstegs (99) mit dem Rumpf (1) verbunden ist, und einer freien Flügelspitze (33) erstrecken, wobei entlang des Flügelwurzelendes (32) eine Rille (9) ausgebildet ist, die einen Venturi-Kanal bildet, wobei die Rille (9) einen Rilleneinlass (90) in der Nähe der Flügelvorderkante (34) und einen Rillenauslass (91) in der Nähe der Flügelhinterkante (35) aufweist, wobei die Rille (9) eine Rillentiefe und eine Rillenbreite aufweist, wobei die Rillenbreite zwischen dem Rilleneinlass (90) und dem Rillenauslass (91) zunimmt.

9. Flugzeug nach Anspruch 8, **dadurch gekennzeichnet, dass** die Flügelvorderkante (34) eine Randklappe (38) aufweist, dass die freien Flügelspitzen (33) gekrümmt sind und optional dass die Flügelhinterkante (35) mindestens eine Außenklappe für niedrige Geschwindigkeit (36) aufweist.

10. Flugzeug nach Anspruch 8 oder 9, **dadurch gekennzeichnet, dass** jeder der Flügel (3) mit Differenzdruck-Messelementen ausgestattet ist, die den Überdruck an der Flügelunterseite mit dem Unterdruck an der Flügeloberseite vergleichen, wobei diese Elemente mit einem Rechner kommunizieren, um die Strömung zu überwachen und eine positive oder negative Startfähigkeit anzuzeigen.

11. Flugzeug nach einem der vorhergehenden Ansprüche, **dadurch gekennzeichnet, dass** es eine Flugzeugnase (8) aufweist, deren Profil sich in einer Richtung (D1) erstreckt, die relativ zur Längsachse (D) des Flugzeugs in einem abwärts gerichteten Winkel zwischen etwa 5° und 25° geneigt ist.

12. Flugzeug nach einem der vorhergehenden Ansprüche, **dadurch gekennzeichnet, dass** das Turboprop-Triebwerk (5) eine Antriebsvorrichtung für eine Turbine umfasst, die zwischen elektrischer Energie und fossiler Energie wechselt, um einen Propeller (50) anzutreiben, der in der Lage ist, einen ausströmenden Luftstrom zu erzeugen, der in einer mittleren Richtung verläuft, die im Wesentlichen parallel zur Längsachse (D) des Flugzeugs liegt, zwischen den V-förmigen Elementen (60) des Leitwerks (6).

13. Flugzeug nach einem der vorhergehenden Ansprüche, umfassend ein Cockpit mit einem Steuerpult (23), das Folgendes umfasst:
- ein oberes Steuerpanel, das sich zumindest teilweise an einer oberen Innenwand des Cockpits (2) erstreckt, wobei dieses obere Steuerpanel erste Steuergeräte für das elektrische, hydraulische und pneumatische System des Flugzeugs zusammenfasst; und
- ein vorderes Steuerpanel (25), das sich zumindest teilweise an einer vorderen Wand des Cockpits (2) erstreckt und insbesondere zweite Steuergeräte für die Bordsysteme (26) des Flugzeugs sowie für den elektrischen Schutz umfasst, sowie eine Startfähigkeitsanzeige (27), die eine positive oder negative Startfähigkeitsinformation liefert, die von einem Rechner aus Daten generiert wird, die von aerodynamischen Druckmesssensoren unter und/oder auf der Tragflächenanordnung (3) erfasst werden.

14. Flugzeug nach Anspruch 13, wobei das Cockpit eine Dummy-Steuerungsvorrichtung (28) für das Ein- und Ausfahren des Fahrwerks (4) umfasst.

## Claims

1. Aircraft for pilot training, said aircraft comprising notably a fuselage (1) extending along a longitudinal axis (D) of the aircraft, said fuselage (1) having a front end forming an aircraft nose (8) and a rear end, said aircraft (1) comprising a cockpit (2), a wing assembly (3), a landing gear (4), at least one turboprop engine (5), and a tail assembly (6), the aircraft further comprising two canard foreplanes (7) symmetrically arranged with respect to the longitudinal axis (D), fixed to the fuselage (1) in the front part of the aircraft, on either side of the nose (8) and substantially upstream of the cockpit (2), said tail assembly (6) comprising two elements (60) forming a V-shape, symmetrically arranged with respect to said longitudinal axis (D) of the aircraft, and said at least one turboprop engine (5) being located above the fuselage (1) upstream of said tail assembly (6) and in a symmetry plane containing said longitudinal axis (D) of the aircraft, between the two elements (60) forming a V of said tail assembly (6).

2. Aircraft according to claim 1, **characterized in that** each of the canard foreplanes (7) comprises a leading edge (71), a trailing edge (72), and a curved end (70), between two edge ends, namely a leading edge end (71) and a trailing edge end (72), each of said leading edges (71) comprising at least one high-lift flap (73) and each of said trailing edges (72) optionally comprising a slotted flap (74).

3. Aircraft according to claim 1 or 2, **characterized in that** the elements (60) forming a V in said tail assembly (6) define an angle (A2) between them ranging substantially from 100° to 125°.

4. Aircraft according to claim 1, 2, or 3, **characterized in that** said elements (60) forming a V each have a substantially triangular shape with a leading edge (61) and a trailing edge (62), said leading edge (61) being oriented in an inclined direction relative to said longitudinal axis (D) of the aircraft, at an inclination angle (A3) ranging substantially from 100° to 160°.

5. Aircraft according to any one of the preceding claims, **characterized in that** each of the elements (60) forming a V includes subdivided and independent rudder surfaces (63).

6. Aircraft according to any one of the preceding claims, **characterized in that** said tail assembly (6) comprises a biomimetic device (10) positioned at said rear end of the fuselage (1), extending said rear end along the longitudinal axis (D) of the aircraft, said biomimetic device (10) comprising blades (11) articulated relative to each other around a first pivot axis perpendicular to said longitudinal axis (D) of the aircraft, between a retracted position in which said blades (11) are stacked on top of each other and a deployed position in which said blades (11) form a fan-like arrangement.

7. Aircraft according to claim 6, **characterized in that** the biomimetic device (10) is mounted pivotable around a second axis perpendicular to said longitudinal axis (D) of said aircraft.

8. Aircraft according to any one of the preceding claims, **characterized in that** said wing assembly comprises two swept-back symmetrical wings (3), each wing (3) having a sinusoidal profile and comprising a wing leading edge (34) and a wing trailing edge (35), extending respectively between a wing root end (32), which is connected to the fuselage (1) through a box structure (12) via a root rib-brace (99), and a free wingtip (33), wherein a groove (9) forming a Venturi corridor is arranged along the wing root end (32), said groove (9) having a groove inlet (90) near the wing leading edge (34) and a groove outlet (91) near the wing trailing edge (35), said groove (9) having a groove depth and a groove width, said groove width increasing between said groove inlet (90) and said groove outlet (91).

9. Aircraft according to claim 8, **characterized in that** said wing leading edge (34) has a tip slat (38), **in that** the free wingtips (33) are curved, and optionally, **in that** the wing trailing edge (35) comprises at least one low-speed outer aileron (36).

10. Aircraft according to claim 8 or 9, **characterized in that** each of the wings (3) is equipped with differential pressure measurement elements to compare the overpressure on the wing lower surface to the underpressure on the wing upper surface, said elements communicating with a computer to monitor airflow and provide a positive or negative takeoff capability indication.

11. Aircraft according to any one of the preceding claims, **characterized in that** it comprises an aircraft nose (8) whose profile extends in a direction (D1) inclined relative to the longitudinal axis (D) of the aircraft, at a downward angle ranging substantially from 5° to 25°.

12. Aircraft according to any one of the preceding claims, **characterized in that** said turboprop engine (5) comprises a turbine drive system transitioning between electrical energy and fossil energy to rotate a propeller (50) capable of generating an outgoing airflow directed in a median direction substantially parallel to the longitudinal axis (D) of the aircraft, between said elements (60) forming a V in said tail assembly (6).

13. Aircraft according to any one of the preceding claims, comprising a cockpit including a control panel (23) comprising:
- an upper control panel, extending at least partially along an upper internal wall of said cockpit (2), said upper control panel grouping first control devices for the aircraft's electrical, hydraulic, and pneumatic systems; and
- a front control panel (25), extending at least partially along a front wall of said cockpit (2), comprising notably second control devices for the aircraft's onboard services (26) and electrical protection, as well as a takeoff capability indicator (27), said indicator (27) providing a positive or negative takeoff capability indication, generated by a computer based on data from aerodynamic pressure variation measurement elements positioned under and/or on said wing assembly (3).

14. Aircraft according to claim 13, wherein the cockpit comprises a dummy control device (28) for retracting and extending the landing gear (4).
